# EUROPÄISCHE PATENTSCHRIFT

(11) **EP 2 709 859 B1**
(45) Veröffentlichungstag und Bekanntmachung des Hinweises auf die Patenterteilung: **16.12.2015**
(21) Anmeldenummer: 12762275.1
(22) Anmeldetag: 20.09.2012
(51) Int. Cl.: B60G 9/00, B60B 35/00, B60G 7/00

(54) **ACHSLAGERUNG FÜR NUTZFAHRZEUGE**
AXLE MOUNTING FOR COMMERCIAL VEHICLES
FIXATION DE L'ESSIEU POUR VÉHICULES UTILITAIRES

(30) Priorität: 22.09.2011 DE 102011083221
(43) Veröffentlichungstag der Anmeldung: 26.03.2014
(73) Patentinhaber: SAF-HOLLAND GmbH, 63856 Bessenbach (DE)
(72) Erfinder: SPIELMANN, Rolf, 97877 Wertheim-Bettingen (DE)
(74) Vertreter: Müller Schupfner & Partner Patent- und Rechtsanwaltspartnerschaft mbB
(86) Internationale Anmeldenummer: PCT/EP2012/068487
(87) Internationale Veröffentlichungsnummer: WO 2013/041597

(56) Entgegenhaltungen:
- EP-A2- 0 906 840
- WO-A1-02/074563
- DE-A1-102005 022 745
- DE-A1-102005 038 274
- DE-U1- 29 718 751
- US-A- 6 039 336

## Beschreibung

Die vorliegende Erfindung betrifft eine Achslagerung für Nutzfahrzeuge gemäß dem unabhängigen Anspruch 1. Ein Beispiel eines solchen Achslagerung ist aus der EP 0 906 840 A2 bekannt.

Aus dem Stand der Technik sind Achslagerungen für Nutzfahrzeuge bekannt, bei denen eine starre Achse vorzugsweise über einen Führungslenker und einen Federmechanismus mit dem Fahrzeugrahmen des Nutzfahrzeuges verbunden ist. Weiterhin sind im Bereich der starren Achse Fahrwerkssysteme angeordnet, wie beispielsweise Hydraulikleitungen, Bremsen oder Bremszylinder, die zum Teil erheblichen Belastungen durch während der Fahrt aufgewirbelte Fremdkörper ausgesetzt sind oder die bei Aufsetzen des Fahrzeuges auf ein Hindernis beträchtliche Schäden davontragen können. Insbesondere bei Baufahrzeugen oder Fahrzeugen, die in unwegsamem Gelände eingesetzt werden, kann es häufig zu Betriebsstörungen und Totalausfällen des Nutzfahrzeuges, aufgrund einer Beschädigung wichtiger Fahrwerkssysteme kommen.

Aufgabe der vorliegenden Erfindung ist es, eine Achslagerung für Nutzfahrzeuge bereitzustellen, die bestimmte Fahrwerkssysteme während des Betriebes des Nutzfahrzeuges schützt und auf diese Weise die Lebensdauer und die Verlässlichkeit des Nutzfahrzeuges erhöht.

Diese Aufgabe wird gelöst mit einer Achslagerung für Nutzfahrzeuge gemäß Anspruch 1. Weitere Vorteile und Merkmale der Erfindung ergeben sich aus den abhängigen Ansprüchen.

Erfindungsgemäß umfasst die Achslagerung eine Trägereinheit und eine Schutzeinheit, wobei die Trägereinheit einen ersten Befestigungsbereich zum Festlegen einer Nutzfahrzeugachse daran und einen zu diesem benachbart angeordneten Aufnahmebereich zur Aufnahme von Fahrwerkssystemen aufweist und wobei die Schutzeinheit derart an der Trägereinheit angeordnet ist, dass der Aufnahmebereich quer zu einer Axialrichtung von der Trägereinheit und der Schutzeinheit umschlossen ist, um das Eindringen von Fremdkörpern in den Aufnahmebereich zu behindern. Die wesentlichen Komponenten der Achslagerung für Nutzfahrzeuge sind also die Trägereinheit und die Schutzeinheit. Die Trägereinheit ähnelt dabei ihrer Funktion nach einem herkömmlichen Führungslenker für Fahrzeugachsen. Sie dient also in erster Linie der Lagerung einer Achse, bevorzugt der starren Fahrzeugachse eines Nutzfahrzeuges. Zur Aufnahme der Fahrzeugachse weist die Trägereinheit einen ersten Befestigungsbereich auf. Insbesondere bevorzugt ist dieser Befestigungsbereich als Aussparung ausgelegt, besonders bevorzugt als zylinderförmige Aussparung, in welcher eine zumeist zylinderförmig ausgelegte Nutzfahrzeugachse eingreift, um an der Trägereinheit festgelegt zu sein. Benachbart zum ersten Befestigungsbereich weist die Trägereinheit einen Aufnahmebereich auf, welcher insbesondere dafür geeignet ist, Fahrwerkssysteme, wie beispielsweise Bremszylinder, Hydraulikleitungen oder ähnliche Periphersysteme des Fahrwerks eines Nutzfahrzeuges, aufzunehmen und zu lagern. Die Axialrichtung ist vorzugsweise parallel zur Haupterstreckungsrichtung der Nutzfahrzeugachse ausgerichtet. Insbesondere bevorzugt sind die Axialrichtung und der erste Befestigungsbereich koaxial zueinander angeordnet. Um das Eindringen von Fremdkörpern, insbesondere von Schmutz und aufgewirbelten Objekten, in den Aufnahmebereich während des Betriebes des Nutzfahrzeuges zu verhindern, ist der Aufnahmebereich quer zur Axialrichtung von der Schutzeinheit und der Trägereinheit umschlossen. Während des Betriebes des Nutzfahrzeuges ist es insbesondere zu erwarten, dass Fremdkörper von unten her also, insbesondere von der Straße oder dem Untergrund auf welchem sich das Nutzfahrzeug bewegt, in Richtung des Aufnahmebereiches aufgewirbelt werden und in diesen eindringen. Es ist daher insbesondere bevorzugt, dass die Schutzeinheit den Aufnahmebereich nach unten hin umgibt. Zweckmäßigerweise ist die Erstreckung längs der Axialrichtung der Schutzeinheit gleich oder größer als die Erstreckung der Trägereinheit in diesem Bereich.

Vorzugsweise ist die Schutzeinheit an zumindest zwei voneinander beabstandeten Befestigungsbereichen an der Trägereinheit festgelegt. Auf diese Weise kann zum einen erreicht werden, dass die Schutzeinheit einen bestimmten Teil des Aufnahmebereiches bzw. die nach unten weisende Seite des Aufnahmebereiches umschließt und dadurch abdeckt und schützt. Zum anderen kann die Schutzeinheit über die beiden Befestigungsbereiche eine Stabilitätsfunktion erfüllen, indem sie die Trägereinheit zusätzlich stützt. Bevorzugt ist die Schutzeinheit derart an der Trägereinheit festgelegt, dass sie Kräfte und Biegemomente aufnehmen und somit die Gesamtstabilität, insbesondere das Flächenträgheitsmoment zwischen den beiden Befestigungsbereichen der Schutzeinheit, erhöhen kann und auf diese Weise die Trägereinheit entlastet und eine dünnwandigere bzw. leichtere Auslegung der Trägereinheit ermöglicht. Alternativ bevorzugt kann es auch sein, dass die Schutzeinheit lediglich an einem Befestigungsbereich an der Trägereinheit festgelegt ist und ein zweites Ende der Schutzeinheit als distales Ende ausgeführt ist, welches vorzugsweise über die Trägereinheit hinausragen kann, um in weiteren Bereichen des Fahrwerks eine Schutzfunktion zu übernehmen.

In einer bevorzugten Ausführungsform weist die Schutzeinheit einen Flächenbereich und einen diesen verstärkenden Tragbereich auf, wobei der Tragbereich eine höhere Biegesteifigkeit quer zur Axialrichtung aufweist als der Flächenbereich und wobei der Flächenbereich vorzugsweise einer Erstreckung längs der Axialrichtung aufweist, die zumindest so groß ist, wie die Erstreckung der Trägereinheit in dieser Richtung. In dieser bevorzugten Ausführungsform erfüllt die Schutzeinheit bevorzugt zwei wesentliche Aufgaben: Zum einen das Abschirmen des Aufnahmebereiches gegen Eindringen von aufgewirbelten Fremdkörpern, zum anderen auch das Übernehmen einer Stützfunktion, die die Stabilität der Achslagerung erhöht und gleichzeitig, beispielsweise bei Aufsitzen der Fahrzeugachse auf einem großen stabilen Hindernis, einen umfassenden Schutz des Aufnahmebereiches gegenüber Einwirkung großer Kräfte, die zur Beschädigung im Aufnahmebereich vorgesehenen Fahrwerkssysteme führen können, bietet. Die Trennung dieser Aufgaben auf zwei Bereiche, ermöglicht, dass sowohl der Flächenbereich, als auch der Tragbereich optimal für ihre Funktion ausgelegt sind und in der Summe Material und Gewicht eingespart werden kann. Der Flächenbereich der Schutzeinheit übernimmt dabei bevorzugt die Funktion der Abschirmung des Aufnahmebereiches gegen das Eindringen von aufgewirbelten Fremdkörpern. Bevorzugt ist der Flächenbereich im Querschnitt zumindest abschnittsweise v-förmig ausgebildet, damit bereits im Aufnahmebereich befindliche Fremdkörper am Flächenbereich herab gleiten und so aus dem Fahrwerk des Nutzfahrzeugs herausgelangen können. Der Tragbereich dagegen erhöht bevorzugt die Stabilität der Achslagerung und ist insbesondere bevorzugt derart ausgelegt, dass wenn das Fahrzeug auf einem großen Hindernis, wie beispielsweise einem Stein oder einer Bordsteinkante, aufsitzt, er den Aufnahmebereich vor Einwirken großer Kräfte schützt. Der Tragbereich kann vorzugsweise als Rohr oder sonstiges Profil ausgebildet sein, insbesondere bevorzugt sind I-träger-, L-träger- oder U-trägerförmig ausgebildete Profile, da sie ein hohes Flächenträgheitsmoment und damit bei verhältnismäßig geringem Gewicht eine hohe Biegesteifigkeit aufweisen. Der Flächenbereich ist vorzugsweise als Blech ausgebildet, wobei insbesondere bevorzugt ein Stahlblech oder ein Aluminiumblech vorgesehen ist. Weiterhin bevorzugt kann der Flächenbereich auch aus Kunststoff hergestellt sein, so beispielsweise aus einem thermo- oder duroplastischen Material, welches leicht ist, kostengünstig in der Herstellung ist und insbesondere bevorzugt gute Absorptionseigenschaften bei Eindringen von sich schnell bewegenden Fremdkörpern aufweist.

In einer bevorzugten Ausführungsform ist der Flächenbereich der Schutzeinheit bevorzugt auf der dem Aufnahmebereich gegenüberliegenden Seite des Tragbereiches angeordnet, wobei der Flächenbereich vorzugsweise als Verschleißteil ausgelegt und mittels einer lösbaren Verbindung am Tragbereich festlegbar ist. Bevorzugt ist es also, dass der Flächenbereich der Schutzeinheit nicht nur den Aufnahmebereich, sondern auch den Tragbereich gegen das Eindringen von Fremdkörpern schützt, wobei der Flächenbereich insbesondere bevorzugt als Verschleißteil ausgelegt ist. Verschleißteile sind im Allgemeinen dadurch gekennzeichnet, dass sie auf einfache Weise herzustellen und auszutauschen sind und so eine kostengünstige Instandhaltung von Bereichen des Nutzfahrzeuges, die hohen Belastungen bzw. hohen Umwelteinflüssen ausgesetzt sind, ermöglichen. Zur einfachen und schnellen Montage des Flächenbereiches am Tragbereich kann es bevorzugt sein, dass dieser mittels Schellen, Schrauben, Bolzen oder ähnlichen einfach herstellbaren und lösbaren Verbindungen am Tragbereich festgelegt ist.

Bevorzugt ist der Tragbereich als Schutzbügel ausgebildet, welcher den Flächenbereich gegen die Einwirkung großer Körper und gegen Bodenkontakt schützt. Hierbei bietet es sich an, den Tragbereich als gekrümmtes Rohr auszubilden, welches an seinen Enden Befestigungsflansche aufweist um über eine Schraub- oder Schweißverbindung an der Trägereinheit festgelegt zu werden. Mit Vorteil wird die Montage der Achslagerung dadurch vereinfacht, dass auch der Flächenbereich Befestigungsflansche aufweist, mittels welcher er gemeinsam mit dem Tragbereich an der Trägereinheit festlegbar ist. Durch eine Beabstandung des Tragbereiches vom Flächenbereich in dem zwischen den Befestigungsbereichen, bzw. Befestigungsflanschen liegenden Bereich, kann auch bei Einwirken großer Kräfte und einer dauerhaften oder temporären Verformung des Tragbereiches der Flächenbereich vor Einwirkung dieser Kräfte geschützt werden. Bevorzugt sind eine Vielzahl von Befestigungsbereichen nebeneinander angeordnet und bilden eine Art Gitter, welches Fremdkörper ab einer bestimmten Großen vom Eindringen in den Aufnahmebereich hindert.

Von Vorteil ist es, wenn der Schutzbereich den Aufnahmebereich einer quer zur Axialrichtung liegenden Ebene zumindest teil- oder abschnittsweise umschließt. Um den Aufnahmebereich der Trägereinheit nicht nur gegen das Eindringen von Fremdkörpern, die sich von unten her in Richtung des Aufnahmebereiches bewegen, zu schützen, sondern auch gegen Fremdkörper, die Geschwindigkeitskomponenten in Axialrichtung aufweisen, ist bevorzugt, dass der Aufnahmebereich der Trägereinheit auch quer zur Axialrichtung gegen das Eindringen von Fremdkörpern geschützt ist. Derartige Fremdkörper, die eine Geschwindigkeitskomponente in Axialrichtung aufweisen, können beispielsweise von vorausfahrenden Rädern des Nutzfahrzeuges oder durch Reflektion bzw. Abprallen an der restlichen Fahrzeugstruktur des Nutzfahrzeuges in Bewegung versetzt werden. Bevorzugt ist es insbesondere, dass der Flächenbereich der Schutzeinheit sich nicht nur flächig in Axialrichtung erstreckt, sondern an seinen jeweiligen seitlichen Enden quer zur Axialrichtung liegende Flanken aufweist. Dabei können in die Flanken bzw. die quer zur Axialrichtung liegenden Seiten des Flächenbereiches Aussparungen eingebracht sein, um hydraulische Leitungen oder ähnliche Kabel und Steuerelemente in den Aufnahmebereich hineinzuleiten. Ein weiterer positiver Effekt dieser Auslegungsform ist, dass die Fahrwerkssysteme bei Betrieb des Nutzfahrzeuges im Winter auch vor Kontakt zu korrosionsverursachendem Salz geschützt werden können und somit deren Lebensdauer deutlich erhöht ist.

Besonders bevorzugt ist es, dass die Trägereinheit einen zweiten Befestigungsbereich zum Festlegen der Trägereinheit am Fahrzeugrahmen eines Nutzfahrzeuges und einen dritten Befestigungsbereich, an dem ein Federelement in Eingriff bringbar ist aufweist, wobei der Aufnahmebereich und die Schutzeinheit vorzugsweise zwischen dem ersten Befestigungsbereich und dem zweiten Befestigungsbereich der Trägereinheit angeordnet sind. Um die Achse des Nutzfahrzeuges bevorzugt mittelbar über die Trägereinheit an dem Fahrzeugrahmen des Nutzfahrzeuges festzulegen, weist die Trägereinheit einen zweiten Befestigungsbereich auf, welcher insbesondere bevorzugt schwenkbar am Fahrzeugrahmen des Nutzfahrzeuges angebracht ist. Weiterhin soll die Achse des Nutzfahrzeuges gefedert gelagert sein, wobei die Trägereinheit zu diesem Zweck einen dritten Befestigungsbereich aufweist, an welchem ein Federelement insbesondere bevorzugt eine Luftfeder oder eine Spiralfeder angreift und die Trägereinheit bei Schwenkbewegung um den zweiten Befestigungsbereich federt. Weiterhin ist insbesondere bevorzugt ein Stoßdämpfelement bzw. ein Schwingungsdämpfelement an der Trägereinheit vorgesehen, welches wiederum mit dem Fahrzeugrahmen des Nutzfahrzeuges verbunden ist. Insbesondere bevorzugt ist es, dass der Aufnahmebereich und die Schutzeinheit zwischen dem ersten Befestigungsbereich, also zwischen dem Befestigungspunkt der Fahrzeugachse, und dem zweiten Befestigungsbereich, also dem Befestigungspunkt der Trägereinheit am Fahrzeugrahmen, vorgesehen sind. Dies ist besonders aus dem Grund bevorzugt, dass der zweite Befestigungsbereich am Fahrzeugrahmen festgelegt ist und Schwenkbewegungen der Trägereinheit um diesen Festlegungspunkt stattfinden, wobei ein weiter vom zweiten Befestigungsbereich entfernter Punkt an der Trägereinheit, größere Amplituden während der Schwingbewegung erlebt. Es ist bevorzugt, dass beispielsweise Hydraulikleitungen und evtl. andere periphere Systeme des Fahrzeugs so nah wie möglich am zweiten Befestigungsbereich festgelegt sind und kleinere Schwingungsamplituden erleben, insbesondere um benötigte flexible Abschnitte dieser Systeme möglichst kurz halten zu können und um die wirkenden Fliehkräfte zu begrenzen.

Ferner bevorzugt ist die Schutzeinheit ausgelegt, zwischen den Aufnahmebereichen auftretende Kräfte und Biegemomente zumindest teilweise aufzunehmen. Insbesondere bevorzugt ist es, dass die Schutzeinheit Kräfte und Biegemomente aufnimmt, die sonst allein von der Trägereinheit getragen werden müssten, wobei die Schutzeinheit auf diese Weise die Gesamtstabilität der Achslagerung erhöht. Bevorzugt ist es, dass, sofern der Aufnahmebereich und die Schutzeinheit zwischen dem ersten Befestigungsbereich und dem zweiten Befestigungsbereich der Trägereinheit angeordnet sind, die Schutzeinheit Kräfte und Biegemomente aufnimmt, die zwischen dem ersten Befestigungsbereich und dem zweiten Befestigungsbereich wirken.

Erfindungsgemäß ist die Schutzeinheit form- und kraftschlüssig an der Trägereinheit festgelegt. Insbesondere bevorzugt ist hierbei eine Festlegung der Schutzeinheit an der Trägereinheit mittels einer Schraube oder einer Vielzahl von Schrauben, welche sowohl einen Form- als auch einen Kraftschluss zwischen Schutzeinheit und Trägereinheit herstellen. Weiterhin bevorzugt können sowohl an der Trägereinheit als auch an der Schutzeinheit einander gegenüberliegende Vor- und Rücksprünge vorgesehen sein, welche einen Formschluss zwischen Trägereinheit und Schutzeinheit herstellen, wobei dieser besonders bevorzugt durch eine weitere Schraubverbindung verstärkt wird.

In vorteilhafter Weise kann die Schutzeinheit derart ausgebildet sein, dass sie den Aufnahmebereich strömungsmechanisch vorteilhaft verkleidet, um den Luftwiderstand des Nutzfahrzeuges zu senken. Insbesondere bevorzugt ist es, dass die Schutzeinheit an ihrer nach außen weisenden, also bevorzugt an der nach unten weisenden Seite, Rundungen und strömungsmechanisch günstige Konturen aufweist, die einen gleichmäßigen Strömungsverlauf um den Aufnahmebereich während des Betriebes des Nutzfahrzeuges ermöglichen. Insbesondere bevorzugt ist es, dass sprungartige Rücksprünge oder Vorsprünge mit scharfen Kanten, an denen eine Strömungsablösung und Wirbelbildung stattfindet, durch allmählich zunehmende oder abnehmende bzw. glatte Querschnittsverläufe an der Schutzeinheit ersetzt werden, um eine bevorzugt quasi laminare bzw. nicht abgelöste Strömung um die Achslagerung zu ermöglichen.

Mit Vorteil weist die Schutzeinheit Aussparungen auf, die das Durchtreten von Kühlluft in den Aufnahmebereich begünstigen, um ein Überhitzen der Fahrwerkssysteme zu verhindern. Insbesondere dann, wenn die Schutzeinheit den Aufnahmebereich in mehreren Richtungen nahezu vollständig umschließt, kann es erwünscht sein, dass die Schutzeinheit Aussparungen aufweist, durch welche Kühlluft in den Aufnahmebereich gelangen kann und die dort befindlichen Fahrwerkssysteme zu kühlen. Insbesondere bevorzugt ist es, dass die Aussparungen in Fahrtrichtung, insbesondere bevorzugt seitlich an der Schutzeinheit vorgesehen sind, so dass möglichst wenig mit Fremdkörpern beladene Luft in den Aufnahmebereich gelangt. Die Aussparung zum Eintreten der Luft ist dabei bevorzugt derart klein ausgelegt, dass größere Fremdkörper nicht durch diese hindurchgelangen können und die im Aufnahmebereich befindlichen Fahrwerkssysteme gefährden können.

Bevorzugt ist der zweite Befestigungsbereich der Trägereinheit als zylinderförmige Aussparung ausgebildet, um drehbar um die Mittelpunktsachse der Aussparung am Fahrzeugrahmen lagerbar zu sein. Mit anderen Worten, ist der zweite Befestigungsbereich der Trägereinheit bevorzugt als Lagerauge ausgelegt, in welchen eine bevorzugt aus Gummi gebildete Lagerbuchse eingesetzt werden kann, welche wiederum am Fahrzeugrahmen festlegbar ist. Damit die Trägereinheit schwenkbar am Fahrzeugrahmen festlegbar ist, ist es bevorzugt, dass der zweite Befestigungsbereich drehbar um die Mittelpunktsachse seiner Aussparung am Fahrzeugrahmen gelagert ist. Die Schwenkbewegung der Trägereinheit am Fahrzeugrahmen wird dabei bevorzugt durch die im dritten Befestigungsbereich angeordnete Feder bzw. das Federelement eingeschränkt und abgefedert.

Mit Vorteil ist die Schutzeinheit aus einer Kombination eines Metalls mit einem faserverstärkten Verbundwerkstoff gebildet. Besonders bevorzugt ist dabei der Tragbereich aus Metall, beispielsweise Stahl oder einer Aluminiumlegierung, gebildet und der Flächenbereich aus einem Faserverbundwerkstoff gebildet. Der Faserverbundwerkstoff weist dabei besonders gute Schlag-, Stoßabsorptionswerte auf, um während der Fahrt aufgewirbelten Körpern widerstehen zu können.

Vorzugsweise ist der Flächenbereich der Schutzeinheit aus einer Vielzahl von Flächensegmenten gebildet ist, die am Tragbereich festlegbar sind. Die Flächensegmente sind dabei bevorzugt als Blechstreifen ausgebildet, welche miteinander austauschbar sind. Bei Beschädigung eines Bereiches der Schutzeinheit muss somit nicht mehr die gesamte Schutzeinheit ersetzt werden, sondern es reicht das jeweilige beschädigte Flächensegment zu ersetzen. Die Austauschbarkeit der Flächensegmente vereinfacht bevorzugt deren Fertigung, da nur ein Typ von Flächensegmenten produziert wird, welcher über den Tragbereich verteilt, den Flächenbereich der Schutzeinheit bildet. Vorzugsweise werden die Flächensegmente über eine Schraub-, Niet-, oder Schweißverbindung an dem Tragbereich der Schutzeinheit festgelegt.

Mit Vorteil weist die Achslagerung eine Querschnittsform auf, die sich im Bereich der Schutzeinheit auf Höhe des Aufnahmebereiches von der Querschnittsform im Bereich der Schutzeinheit auf Höhe des ersten Befestigungsbereiches unterscheidet. Weiterhin bevorzugt unterscheidet sich die Querschnittsform der Achslagerung im Bereich der Schutzeinheit auf Höhe des Aufnahmebereiches von der Querschnittsform im Bereich der Schutzeinheit auf Höhe des zweiten Befestigungsbereiches. Mittels dieses im entlang der Schutzeinheit variierenden Querschnitts der Achslagerung, insbesondere bevorzugt der Trägereinheit, kann eine optimale Kraftübertragung bei möglichst geringem Gewicht der Achslagerung erreicht werden. Vorzugsweise variieren sowohl die Wandstärken als auch die Querschnittsformen der Trägereinheit, wobei insbesondere bei einer als Gussteil hergestellten Trägereinheit, der Fertigungsaufwand nicht erheblich steigt und dennoch eine Übertragung höherer Kräfte und somit eine Lebensdauersteigerung erreicht wird.

In bevorzugter Weise ist die Trägereinheit vorzugsweise aus einem Metall und/oder einem Faserverbundwerkstoff gebildet und die Schutzeinheit vorzugsweise aus einem Metall und/oder einem Kunststoff. Bevorzugt nimmt die Trägereinheit größere Biegemomente und Kräfte auf als die Schutzeinheit und sie ist daher bevorzugt aus einem biegesteifen Faserverbundwerkstoff, beispielsweise CFK, GFK oder einer Kombination aus Faserverbund mit Metall, beispielsweise Glare, gebildet. Sofern die Schutzeinheit nur geringe oder keine Kräfte und Biegemomente aufnehmen muss, ist es bevorzugt, dass sie aus einem leichten Metall oder Kunststoff gebildet ist, um Gewicht einzusparen. Dabei können bevorzugt Aluminium und thermoplastische oder duroplastische Werkstoffe zum Einsatz kommen, da diese nicht nur kostengünstig herzustellen sind, sondern auch eine geringe Dichte aufweisen.

Es kann bevorzugt sein, dass die Geometrien der Trägereinheit und der Schutzeinheit derart ausgelegt sind, dass eine möglichst spannungsarme Übertragung von Kräften und Biegemomenten zwischen dem ersten Befestigungsbereich und weiteren Befestigungsbereichen erfolgen kann. Insbesondere bedeutet dies, dass an der Geometrie der Trägereinheit und der Schutzeinheit Kerbwirkung vermindert werden soll, wobei besonders bevorzugt gerundete oder geschwungene Bereiche und Übergänge vorgesehen sind. Es kann auf diese Weise erreicht werden, dass bei möglichst geringer Materialdicke möglichst hohe Kräfte und Momente übertragbar sind und die vom Material der Trägereinheit und der Schutzeinheit vorgegebenen Grenzen für maximale Biegespannung, Korrosionsspannung und Schubspannung nicht überschritten werden. Es wird auf diese Weise eine stabile und gleichzeitig leichte Achslagerung bereitgestellt.

Weitere Vorteile und Merkmale der vorliegenden Erfindung ergeben sich aus der nachfolgenden Beschreibung verschiedener bevorzugter Ausführungsformen der erfindungsgemäßen Achslagerung, mit Bezug auf die beigefügten Figuren. Einzelne Merkmale verschiedener gezeigter Ausführungsformen können dabei im Rahmen der Erfindung miteinander kombiniert werden. Es zeigen:
- Fig. 1: eine Seitenansicht einer bevorzugten Ausführungsform der erfindungsgemäßen Achslagerung,
- Fig. 2: eine perspektivische Ansicht einer nicht erfindungsgemäßen Achslagerung, und
- Fig. 3, 3A, 3B, 3C: Ansichten einer bevorzugten Ausführungsform der erfindungsgemäßen Achslagerung zur Verdeutlichung verschiedener Querschnitte.

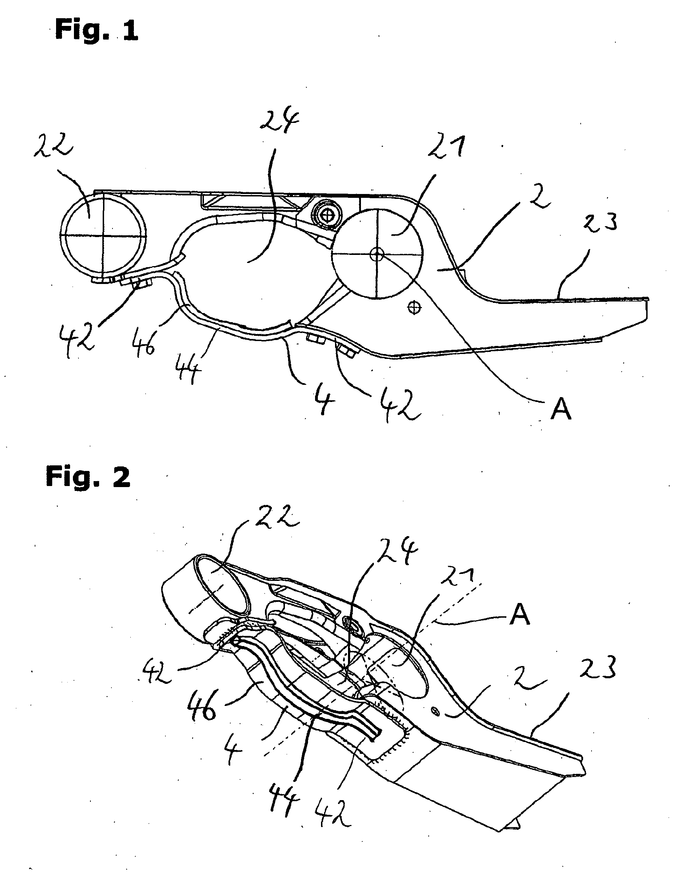

Die in Fig. 1 gezeigte Seitenansicht einer bevorzugten Ausführungsform der erfindungsgemäßen Achslagerung zeigt eine Trägereinheit 2 und eine Schutzeinheit 4. Die Trägereinheit 2 weist einen ersten Befestigungsbereich 21, einen zweiten Befestigungsbereich 22, welcher in der Figur links vom ersten Befestigungsbereich 21 angeordnet ist, und einen dritten Befestigungsbereich 23 auf. Zwischen dem ersten Befestigungsbereich 21 und dem zweiten Befestigungsbereich 22 ist der Aufnahmebereich 24 angeordnet, welcher nach oben hin durch die Trägereinheit 2 begrenzt ist und nach unten hin, durch die an der Trägereinheit vorgesehene bzw. festgelegte Schutzeinheit 4. Wie in der Figur gezeigt, ist der Aufnahmebereich 24 bevorzugt benachbart zum ersten Befestigungsbereich 21 vorgesehen, da zu erwarten ist, dass sekundäre Fahrwerkselemente bzw. -systeme, welche im Aufnahmebereich 24 angeordnet werden sollen, bevorzugt in Nähe der Fahrzeugachse, welche wiederum ihrerseits im Befestigungsbereich 21 der Trägereinheit 2 festgelegt ist, zu finden sind. In der dargestellten Ausführungsform ist der Aufnahmebereich 24 längs der Axialrichtung, also längs der Betrachtungsrichtung offen, wobei es alternativ auch bevorzugt sein kann, dass die Schutzeinheit 4 diese offenen Seiten des Aufnahmebereiches 24 verschließt (in der Figur nicht gezeigt). Die Schutzeinheit 4 weist besonders bevorzugt einen Tragbereich 44 und einen Flächenbereich 46 auf, wobei in der in der Figur gezeigten Ausführungsform der Tragbereich 44 oberhalb des Flächenbereiches 46 angeordnet ist und wobei der Tragbereich 46 in zwei Befestigungsbereiche 42 der Schutzeinheit 4 mit der Trägereinheit 2 verbunden ist. Insbesondere bevorzugt ist es, dass die Befestigungsbereiche 42 der Schutzeinheit 4 Elemente aufweisen, die eine form- bzw. kraftschlüssige Verbindung der Schutzeinheit 4 an der Trägereinheit 2 erlauben. Bevorzugt ist eine Verbindung mittels Schrauben hergestellt. Weiterhin bevorzugt ist es, dass der erste und der zweite Befestigungsbereich (21, 22) als zylinderförmige Aussparungen bzw. Lageraugen vorgesehen sind, um eine Fahrzeugachse bzw. eine Lagerbuchse aufzunehmen. Wie in der Figur gezeigt ist der dritte Befestigungsbereich 23 bevorzugt als im Wesentlichen planer Abschnitt vorgesehen, an welchem eine beispielsweise Luftfeder (nicht gezeigt) aufliegen und senkrecht zu diesem einwirken kann, um die Trägereinheit 2 gegenüber dem Fahrzeugrahmen des Nutzfahrzeuges abzustützen. In alternativen Ausführungsformen könnte der dritte Tragbereich auch zwischen dem ersten und zweiten Tragbereich angeordnet sein. Bevorzugt ist es, dass die Verbindung der Schutzeinheit 4 an der Trägereinheit 2 als lösbare Verbindung ausgelegt ist, damit die Schutzeinheit 4 von der Trägereinheit 2 auf einfache Weise demontiert werden kann, um an die daruntergelegenen Fahrwerkssysteme gelangen zu können um diese zu warten, auszutauschen oder zu erneuern.

Fig. 2 zeigt eine perspektivische Ansicht einer nicht erfindungsgemäßen Achslagerung, wobei die Trägereinheit 2 und die Schutzeinheit 4 von schräg unten her zu sehen sind. Im Gegensatz zu der in Figur 1 gezeigten Ausführungsform ist die Schutzeinheit 4 mittels einer stoffschlüssigen Verbindung an der Trägereinheit 2 festgelegt. Angedeutet ist diese Achslagerung durch die in der Figur gezeigten Schweißnähte, welche umfänglich in den Befestigungsbereichen 42 der Schutzeinheit 4 vorgesehen sind. Es versteht sich, dass die in Fig. 2 gezeigte Schutzeinheit 4 auch über eine Schraubverbindung, wie der in Fig. 1 dargestellt, anstelle einer Schweißverbindung an der Trägereinheit 2 festgelegt sein kann. Weiterhin ist der Tragbereich 44 dargestellt, welcher bevorzugt als rohrförmiger Körper ausgebildet ist und dem Konturverlauf der Schutzeinheit 4 folgt, wobei der Tragbereich 44 in dieser gezeigten Ausführungsform unterhalb des Flächenbereiches 46 angeordnet ist.

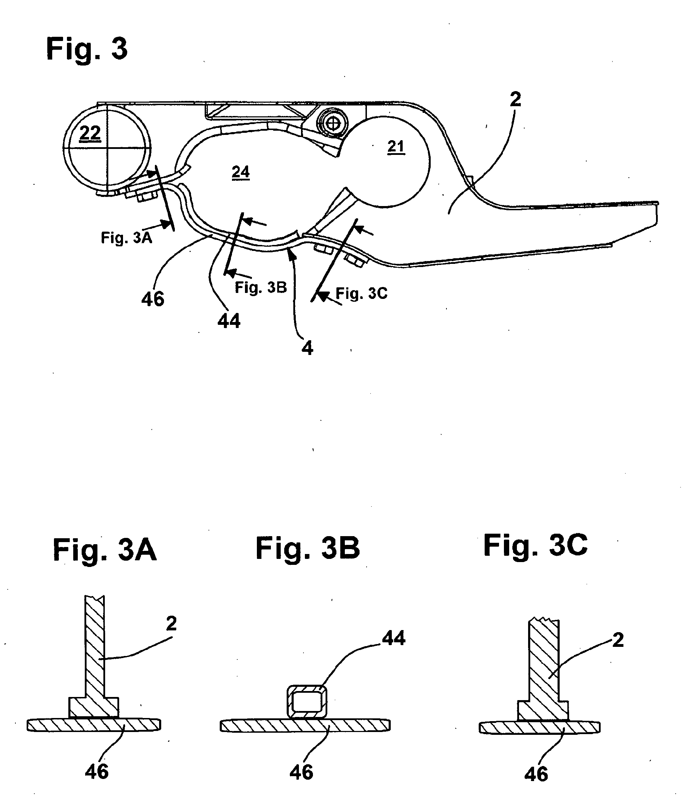

Fig. 3 zeigt eine Seitenansicht der bereits in Fig. 1 dargestellten bevorzugten Ausführungsform, wobei die Lage dreier Schnitte durch die Achslagerung im Bereich der Schutzeinheit 4 gekennzeichnet ist. Fig. 3A zeigt den, in Fig. 3 links gekennzeichneten, Schnitt durch die Achslagerung im Bereich der Schutzeinheit 4 auf Höhe des zweiten Befestigungsbereiches 22. **Fig. 3B** zeigt den, in Fig. 3 in der Mitte gekennzeichneten, Schnitt durch die Achslagerung im Bereich der Schutzeinheit 4 auf Höhe des Aufnahmebereiches 24. Fig. 3C zeigt den, in Fig. 3 rechts gekennzeichneten, Schnitt durch die Achslagerung im Bereich der Schutzeinheit 4 auf Höhe des ersten Befestigungsbereiches 21. Es wird deutlich, dass entlang der Schutzeinheit 4 der Querschnitt der Achslagerung im Bereich der Schutzeinheit 4 variiert. Der Vergleich des in Fig. 3A dargestellten Querschnitt mit dem in **Fig. 3B** zeigt dabei, dass die Trägereinheit 2 auf Höhe des zweiten Befestigungsbereiches 22 einen T-förmigen Querschnitt aufweist, wobei auf Höhe des Aufnahmebereiches 24 kein Material der Trägereinheit 2 vorgesehen ist, sondern nur die Schutzeinheit 4, bestehend aus Tragbereich 44 und Flächenbereich 46. Weiterhin weist die Trägereinheit 2 auf Höhe des ersten Befestigungsbereiches 21 eine größere Materialstärke auf (siehe Fig. 3C) als auf Höhe des zweiten Befestigungsbereiches 22, bevorzugt um den von der Nutzfahrzeugachse auf den ersten Befestigungsbereich 21 übertragenen Kräften besser widerstehen zu können. Durch die verschiedenen Querschnitte und damit Materialstärken, insbesondere der Trägereinheit 2, wird eine optimale Anpassung an die auftretenden Belastungen bei möglichst geringem Gewicht der Achslagerung erreicht.

### Bezugszeichenliste:

2 - Trägereinheit
4 - Schutzeinheit
21 - erster Befestigungsbereich
22 - zweiter Befestigungsbereich
23 - dritter Befestigungsbereich
24 - Aufnahmebereich
42 - Befestigungsbereich
44 - Tragbereich
46 - Flächenbereich

## Patentansprüche

1. Achslagerung für Nutzfahrzeuge, umfassend eine Trägereinheit (2), und eine Schutzeinheit (4),
wobei die Trägereinheit (2) einen ersten Befestigungsbereich (21) zum Festlegen einer Nutzfahrzeugachse daran und einen zu diesem benachbart angeordneten Aufnahmebereich (24) zur Aufnahme von Fahrwerkssystemen aufweist,
wobei die Schutzeinheit (4) derart an der Trägereinheit (2) angeordnet ist, dass der Aufnahmebereich (24) quer zu einer Axialrichtung (A) von der Trägereinheit (2) und der Schutzeinheit (4) umschlossen ist, um das Eindringen von Fremdkörpern in den Aufnahmebereich (24) zu behindern, **dadurch gekennzeichnet, dass** die Schutzeinheit (4) form- und kraftschlüssig an der Trägereinheit (2) festgelegt ist.

2. Achslagerung nach Anspruch 1,
wobei die Schutzeinheit (4) an zumindest zwei voneinander beabstandeten Befestigungsbereichen (42) an der Trägereinheit (2) festgelegt ist.

3. Achslagerung nach einem der vorhergehenden Ansprüche,
wobei die Schutzeinheit (4) einen Flächenbereich (46) und einen diesen verstärkenden Tragbereich (44) aufweist,
wobei der Tragbereich (44) eine höhere Biegesteifigkeit quer zur Axialrichtung (A) aufweist als der Flächenbereich (46), und
wobei der Flächenbereich (46) vorzugsweise eine Erstreckung längs der Axialrichtung (A) aufweist, die zumindest so groß ist wie die Erstreckung der Trägereinheit (2) in dieser Richtung.

4. Achslagerung nach Anspruch 3,
wobei der Flächenbereich (46) der Schutzeinheit (4) bevorzugt auf der dem Aufnahmebereich (24) gegenüber liegenden Seite des Tragbereiches (44) angeordnet ist, und
wobei der Flächenbereich (46) vorzugsweise als Verschleißteil ausgelegt und mittels einer lösbaren Verbindung am Tragbereich (44) festlegbar ist.

5. Achslagerung nach Anspruch 3,
wobei der Tragbereich (44) als Schutzbügel ausgebildet ist, welcher den Flächenbereich (46) gegen die Einwirkung großer Körper und gegen Bodenkontakt schützt.

6. Achslagerung nach einem der vorhergehenden Ansprüche wobei die Schutzeinheit (4) den Aufnahmebereich (24) in einer quer zur Axialrichtung (A) liegenden Ebene zumindest abschnittsweise umschließt.

7. Achslagerung nach einem der vorhergehenden Ansprüche,
wobei die Trägereinheit (2) einen zweiten Befestigungsbereich (22) zum Festlegen der Trägereinheit (2) am Fahrzeugrahmen eines Nutzfahrzeuges und einen dritten Befestigungsbereich (23), an dem ein Federelement in Eingriff bringbar ist, aufweist, und
wobei der Aufnahmebereich (24) und die Schutzeinheit (4) vorzugsweise zwischen dem ersten Befestigungsbereich (21) und dem zweiten Befestigungsbereich (22) der Trägereinheit (2) angeordnet sind.

8. Achslagerung nach Anspruch 7,
wobei die Schutzeinheit (4) ausgelegt ist, zwischen den Aufnahmebereichen (21, 22, 23) auftretende Kräfte und Biegemomente zumindest teilweise aufzunehmen.

9. Achslagerung nach einem der vorhergehenden Ansprüche,
wobei die Schutzeinheit (4) derart ausgebildet ist, dass sie den Aufnahmebereich (24) strömungsmechanisch vorteilhaft verkleidet, um den Luftwiderstand des Nutzfahrzeuges zu senken.

10. Achslagerung nach einem der vorhergehenden Ansprüche,
wobei die Schutzeinheit (4) Aussparungen aufweist, die das Durchtreten von Kühlluft in den Aufnahmebereich (24) begünstigen, um ein Überhitzen der Fahrwerkssysteme zu verhindern.

11. Achslagerung nach einem der vorhergehenden Ansprüche,
wobei die Schutzeinheit (4) aus einer Kombination eines Metalls mit einem faserverstärkten Verbundwerkstoff gebildet ist.

12. Achslagerung nach einem der Ansprüche 3 bis 11,
wobei der Flächenbereich (46) der Schutzeinheit (4) aus einer Vielzahl von Flächensegmenten gebildet ist, die am Tragbereich (44) festlegbar sind.

13. Achslagerung nach einem der vorhergehenden Ansprüche,
aufweisend eine Querschnittsform die sich im Bereich der Schutzeinheit (4) auf Höhe des Aufnahmebereiches (24) von der Querschnittsform im Bereich der Schutzeinheit (4) auf Höhe des ersten Befestigungsbereiches (21) unterscheidet.

## Claims

1. An axle mount for utility or commercial vehicles, comprising a carrier unit (2) and a protective unit (4),
wherein the carrier unit (2) has a first fastening region (21) for the fixing of a utility vehicle axle thereto and has, arranged adjacent to said fastening region (21), a receiving region (24) for receiving or accommodating chassis systems,
wherein the protective unit (4) is arranged on the carrier unit (2) such that the receiving region (24) is enclosed transversely with respect to an axial direction (A) by the carrier unit (2) and by the protective unit (4), in such a way that the ingress of foreign bodies or foreign matter into the receiving region (24) is prevented or obstructed,
**characterized in that** the protective unit (4) is positively and frictionally fixed at the carrier unit (2).

2. The axle mount of claim 1,
wherein the protective unit (4) is fixed at the carrier unit (2) at at least two fastening regions (42), which fastening regions are spaced apart.

3. The axle mount of any one of the preceding claims,
wherein the protective unit (4) has a surface area (46) and a support area (44) reinforcing the latter,
wherein the support area (44) has a higher bending stiffness transversely with respect to the axial direction (A) than the surface area (46), and wherein the surface area (46) preferably has an extension along the axial direction (A), which is at least as large as the extension of the carrier unit (2) in this direction.

4. The axle mount of claim 3,
wherein the surface area (46) of the protective unit (4) preferably is arranged on that side of the support area (44) opposite the receiving region (24), and wherein the surface area (46) is preferably designed as an expendable part and may be fixed at the support area (44) by means of a releasable connection.

5. The axle mount of claim 3,
wherein the support area (44) is designed as a safety bar, which protects the surface area (46) against the influence of large bodies or matter and against ground contact.

6. The axle mount of any one of the preceding claims,
wherein the protective unit (4) at least over certain portions encloses the receiving region (24) in a plane lying transversely with respect to the axial direction (A).

7. The axle mount of any one of the preceding claims,
wherein the carrier unit (2) comprises a second fastening region (22) for fixing the carrier unit (2) at the vehicle frame of a commercial vehicle, and a third fastening region (23), at which a spring element may be brought into engagement, and
wherein the receiving region (24) and the protective unit (4) preferably are arranged between the first fastening region (21) and the second fastening region (22) of the carrier unit (2).

8. The axle mount of claim 7,
wherein the protective unit (4) is designed to at least partially absorb forces and bending moments acting between the receiving regions (21, 22, 23).

9. The axle mount of any one of the preceding claims,
wherein the protective unit (4) is designed such that it envelops the receiving region (24) in a fluidically advantageous manner so as to lower the air resistance or air drag of the commercial vehicle.

10. The axle mount of any one of the preceding claims,
wherein the protective unit (4) has cavities which favor the passage of cooling air into the receiving region (24) so as to avoid overheating of the chassis systems.

11. The axle mount of any one of the preceding claims,
wherein the protective unit (4) is formed from a combination of a metal and a fiber-reinforced composite material.

12. The axle mount of any one of claims 3 to 11,
wherein the surface area (46) of the protective unit (4) is formed from a plurality of surface segments, which may be fixed at the support area (44).

13. The axle mount of any one of the preceding claims,
having a cross-sectional shape, which in the area of the protective unit (4) at the height of the receiving region (24) differs form the cross-sectional shape in the area of the protective unit (4) at the height of the first fastening region (21).

## Revendications

1. Montage d'essieu pour véhicules utilitaires, comprenant une unité porteuse (2) et une unité protectrice (4),
dans lequel l'unité porteuse (2) comprend une première zone de fixation (21) pour l'immobilisation d'un essieu de véhicule utilitaire sur celle-ci, et une zone de réception (24), agencée au voisinage de celle-ci, pour la réception de systèmes du train de roulement,
dans lequel l'unité protectrice (4) est agencée sur l'unité porteuse (2) de telle façon que la zone de réception (24) est enfermée, perpendiculairement à une direction axiale (A), par l'unité porteuse (2) et par l'unité protectrice (4) afin d'empêcher la pénétration de corps étrangers dans la zone de réception (24), **caractérisé en ce que**
l'unité protectrice (4) est immobilisée sur l'unité porteuse (2) en coopération de formes et en coopération de forces.

2. Montage d'essieu selon la revendication 1,
dans lequel l'unité protectrice (4) est immobilisée sur l'unité porteuse (2) en au moins deux zones de fixation (42) à distance l'une de l'autre.

3. Montage d'essieu selon l'une des revendications précédentes,
dans lequel l'unité protectrice (4) comprend une zone surfacique (46) et une zone portante (44) qui renforce celle-ci,
dans lequel la zone portante (44) présente une rigidité à la flexion transversalement à la direction axiale (A) plus élevée que la zone surfacique (46), et dans lequel la zone surfacique (46) présente une extension, le long de la direction axiale (A), qui est au moins aussi élevée que l'extension de l'unité porteuse (2) dans cette direction.

4. Montage d'essieu selon la revendication 3,
dans lequel la zone surfacique (46) de l'unité protectrice (4) est agencée de préférence sur le côté de la zone portante (44) situé à l'opposé de la zone de réception (24), et
dans lequel la zone surfacique (46) est de préférence conçue comme une pièce d'usure et est susceptible d'être immobilisée sur la zone portante (44) au moyen d'une liaison détachable.

5. Montage d'essieu selon la revendication 3,
dans lequel la zone portante (44) est réalisée sous forme d'un arceau protecteur, qui protège la zone surfacique (46) à l'encontre des effets de corps de grande taille et à l'encontre de contacts avec le sol.

6. Montage d'essieu selon l'une des revendications précédentes,
dans lequel l'unité protectrice (4) entoure au moins localement la zone de réception (24) dans un plan perpendiculaire à la direction axiale (A).

7. Montage d'essieu selon l'une des revendications précédentes,
dans lequel l'unité porteuse (2) comprend une seconde zone de fixation (22) pour immobiliser l'unité porteuse (2) sur le châssis d'un véhicule utilitaire et une troisième zone de fixation (23) contre laquelle peut être amené en engagement un élément à ressort, et
dans lequel la zone de réception (24) et l'unité protectrice (4) sont agencées de préférence entre la première zone de fixation (21) et la seconde zone de fixation (22) de l'unité porteuse (2).

8. Montage d'essieu selon la revendication 7,
dans lequel l'unité protectrice (4) est conçue pour encaisser au moins partiellement les forces et les couples de flexion qui apparaissent entre les zones de réception (21, 22, 23).

9. Montage d'essieu selon l'une des revendications précédentes,
dans lequel l'unité protectrice (4) est réalisée de telle manière qu'elle réalise un revêtement avantageux de la zone de réception (24) en termes de mécanique des fluides, afin d'abaisser la résistance à l'air du véhicule utilitaire.

10. Montage d'essieu selon l'une des revendications précédentes,
dans lequel l'unité protectrice (4) comporte des évidements qui favorisent la traversée d'air de refroidissement jusque dans la zone de réception (24), afin d'empêcher une surchauffe du système du train de roulement.

11. Montage d'essieu selon l'une des revendications précédentes,
dans lequel l'unité protectrice (4) est formée d'une combinaison d'un métal et d'un matériau composite renforcé par des fibres.

12. Montage d'essieu selon l'une des revendications 3 à 11,
dans lequel la zone surfacique (46) de l'unité protectrice (4) est formée d'une pluralité de segments surfaciques qui sont susceptibles d'être fixés sur la zone porteuse (44).

13. Montage d'essieu selon l'une des revendications précédentes, comprenant une forme de section transversale qui, dans la région de l'unité protectrice (4) à la hauteur de la zone de réception (24), diffère de la forme de section transversale dans la région de l'unité protectrice (4) à la hauteur de la première zone de fixation (21).
